# EUROPEAN PATENT APPLICATION

(11) **EP 1 513 334 A1**
(43) Date of publication of application: **09.03.2005**
(21) Application number: 03020266.7
(22) Date of filing: 08.09.2003
(51) Int. Cl.: H04N 1/21

(54) **Method of and apparatus for picture orientation**

(71) Applicant: Sony Ericsson Mobile Communications AB, 221 88 Lund (SE)
(72) Inventor: Öljer, Fredrik, 234 31 Lomma (SE)
(74) Representative: Dahnér, Christer

(57) **Abstract**

The present invention is directed towards a method and a device for rotating a picture in a portable electronic device such as a cellular phone. The device comprises a first user input unit for selection of a first picture orientation by the user;
a second user input unit for selection of a second picture orientation by the user and
a control unit arranged to:
provide a set of picture orientations that can be selected by a user
detect a picture orientation selection by a user via said first or second user input units,
change the picture orientation in dependence of the selections made by the user while a picture is taken.

## Description

### TECHNICAL FIELD OF THE INVENTION

The present invention relates to the field of picture orientation in portable electronic devices.

### DESCRIPTION OF RELATED ART

In traditional photography pictures can be taken in both a so-called "portrait orientation" as well as in a so-called "landscape orientation". Typically, in traditional photography, there is a mix between portrait and landscape images that can be viewed as paper copies; however, this mix of orientations is normally not a difficulty since it is easy to turn the paper copy in either landscape or portrait during viewing thereof. However, today's technology is often based on digital pictures, taken by a digital camera, to be viewed by means of a display instead of paper copies or other printouts. Typically, the images are stored in the digital camera device in a particular orientation, either landscape or portrait orientation per default regardless of how the user holds the digital camera device, for instance a portable electronic communication device provided with a digital camera, such as a cellular phone provided with camera. In this case, it is not longer easy during viewing to turn the image into a desired orientation when mixing portrait and landscape pictures. Typically, the user has to manually rotate all the pictures that are in a wrong orientation before or when viewing the same.

For instance, all landscape oriented pictures have to be rotated otherwise they do not make sense in the cellular phone or in communication with others if the pictures are per default viewed and/or communicated in portrait orientation. Typically, the portable electronic communication devices of today require additional user interaction in order to rotate the wrongly oriented pictures. Furthermore, it is not always obvious for a user how to rotate a picture. As a typical example, firstly at the moment he finds out the picture is in a wrong orientation he/she can rotate it. At this moment, the user may not know how to do it at all, or it may require reading the operating manual or other additional assistance. This is of course is not a desired situation.

Moreover, as regards requirements of the portable electronic device, it is a quite complex action to rotate a picture for a device having limited processor capacity. Therefore, normally, the user has to wait while the picture is rotated, which of course may be cumbersome for instance when viewing a lot of pictures, whereby many must be rotated.

Thus, several disadvantages remain with today' technology concerning rotating pictures in portable electronic devices having digital cameras.

There is thus a need for providing a user to be able to rotate a picture in an easy way in a portable electronic device. In particular, there is a need for providing a way to rotate a picture in a portable electronic device that can be fully controlled without explicit and additional user interaction, in particular in a portable electronic device having limited processor capacity.

### SUMMARY OF THE INVENTION

The present invention is thus directed towards providing the feature of rotating pictures in a portable electronic device that can be fully controlled by a user in a simple manner such that a picture can be rotated without explicit and additional user interaction.

This is achieved by automatically sensing if the user wants to take a landscape or a portrait oriented picture, and rotate the picture as the picture is taken, when the user anyway has to wait, thereby also minimising the negative effect of the extra time it takes to rotate a picture.

One object of the present invention is to provide a method for picture orientation in a portable electronic device.

According to a first aspect of the present invention, this object is achieved by a method for rotating a picture in a portable electronic device, comprising the steps of:
providing a set of picture orientations that can be selected by a user,
detecting a picture orientation selection for a user, and
changing the picture orientation in dependence of the selections made by the user while a picture is taken.

A second aspect of the present invention is directed to a method including the features of the first aspect, further comprising the step of automatically sensing if the user wants to take a landscape or a portrait oriented picture.

A third aspect of the present invention is directed towards a method including the features of the first aspect, wherein a first user input unit provides a first shutter key and a second user input unit provides a second shutter key, wherein the detection of a selection by an actuation of the first input unit provides selection of a first picture orientation and the detection of a selection by an actuation of the second input unit provides selection of a second picture orientation and the detection of a selection provides changing the picture orientation in dependence of the selections made by the user.

A fourth aspect of the present invention is directed towards a method including the features of the first to the third aspect, comprising the step of automatically rotating the picture and storing in landscape orientation if the second user input unit is actuated.

Another object of the present invention is to provide a portable electronic device, which provides a user to select picture orientation.

According to a fifth aspect of the present invention, this object is achieved by a device for rotating a picture in a portable electronic device comprising:
a first user input unit for selection of a first picture orientation by the user;
a second user input unit for selection of a second picture orientation by the user and
a control unit arranged to:
   provide a set of picture orientations that can be selected by a user detect a picture orientation selection by a user via said first or second user input units, change the picture orientation in dependence of the selections made by the user while a picture is taken.

A sixth aspect of the present invention is directed toward a device including the features of the fifth aspect, wherein the first input unit provides a first shutter key and the second input unit provides a second shutter key.

A seventh aspect of the present invention is directed towards a device including the features of the sixth aspect, wherein the control unit is arranged to automatically sense if the user wants to take a landscape or a portrait picture.

An eight aspect of the present invention is directed towards a device including the features of any one of the fifth to the seventh aspects, wherein the first user input unit is the joy-stick key.

A ninth aspect of the present invention is directed towards a device including the features of any one of the fifth to the eight aspect, wherein the control unit is arranged to store the picture in portrait when the joy-stick is used as shutter key.

A tenth aspect of the present invention is directed towards a device including the features of any one of the fifth aspect to the ninth aspect, wherein the control unit is arranged to rotate and store the picture in landscape when the second user input unit is used as shutter key.

An eleventh aspect of the present invention is directed towards a device including the features of any one of the fifth aspect to the tenth aspect, wherein the second user input unit is a shutter key located on a non-display side of the portable electronic device.

A twelveth aspect of the present invention is directed towards a device including the features of any one of the fifth to the eleventh aspect, wherein the device is an electronic communication device.

A thirteenth aspect of the present invention is directed towards a device including the features of any one of the fifth to the twelveth aspect, wherein the device is a cellular phone, a PDA or a smart-phone.

The invention has many advantages. It does not require any technology, such as a gyro or the like, for sensing orientation of the portable device. No user interaction is needed in order to get an image in wanted orientation (portrait or landscape orientation). The actual orientation of the device (the viewfinder) corresponds to how the picture will be oriented (What you see is what you get). The pictures will be displayed in correct orientation in albums mixing portrait and landscape oriented pictures.

The invention is also very inexpensive to implement, because it can be implemented using the user input units already provided in the device with just some extra software in addition to the camera software already existing.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
Fig. 1 shows a front view of a portable electronic device in the form of a cellular phone, wherein the device is held in a portrait orientation,
Fig. 2a shows the same portable electronic device as illustrated in Fig. 1 held in a landscape orientation,
Fig. 2b the same device as illustrated in Fig. 2a after automatic rotation of the picture,
Fig. 3 shows a block schematic of the relevant parts according to an embodiment of the invention inside the phone in Fig. 1, and
Fig. 4 shows a flow chart of a method according to an embodiment of the invention.

### DETAILED DESCRIPTION OF EMBODIMENTS

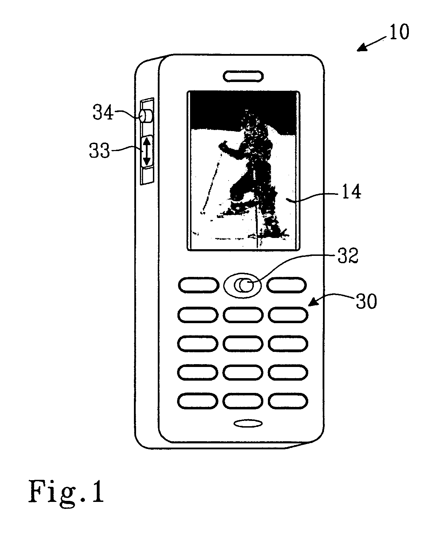

A portable electronic device provided with a digital camera into which the invention can be implemented is shown in Fig. 1, which here is shown in a front view. Preferably, the portable electronic device is a cellular phone 10 having an antenna (not shown) for communication with other users via a network, a display unit 14 for showing pictures, showing a picture taken by the camera in an orientation that can be selected by a user, in this case in a portrait orientation. The cellular phone 10 further comprises a keypad 30 comprising first user input unit 32, herein in the form of a joy-stick key, providing a first shutter key, for taking a picture and selecting a first picture orientation, in this case the portrait orientation and a second user input unit 34, providing a second shutter key for taking a picture and selecting a second picture orientation, for instance a landscape orientation.

The first and second shutter keys 32, 34, the digital camera and the function thereof are known per se and will therefore not be further described.

Alternatively, or in addition, the second user input unit 34 can also be provided in a volume button 33. The volume button 33 can be actuated in an upward direction and in an opposite downward direction, which is indicated by an arrow pointing in both these directions in the figure, of which both directions typically provides the conventional shutter key function.

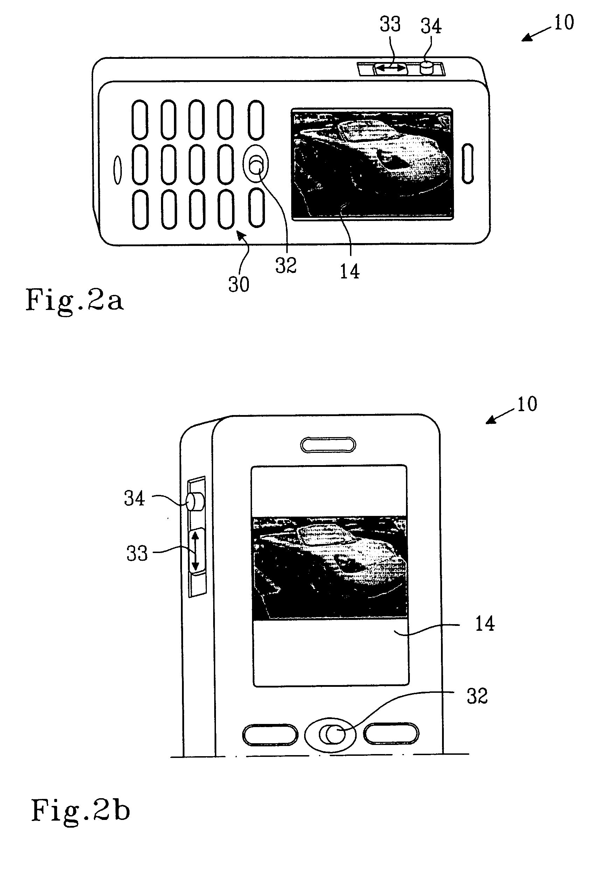

Fig. 2a shows the same portable electronic device as illustrated in Fig. 1 held in a landscape orientation, and Fig. 2b the same device as illustrated in Fig. 2a after automatic rotation of the picture.

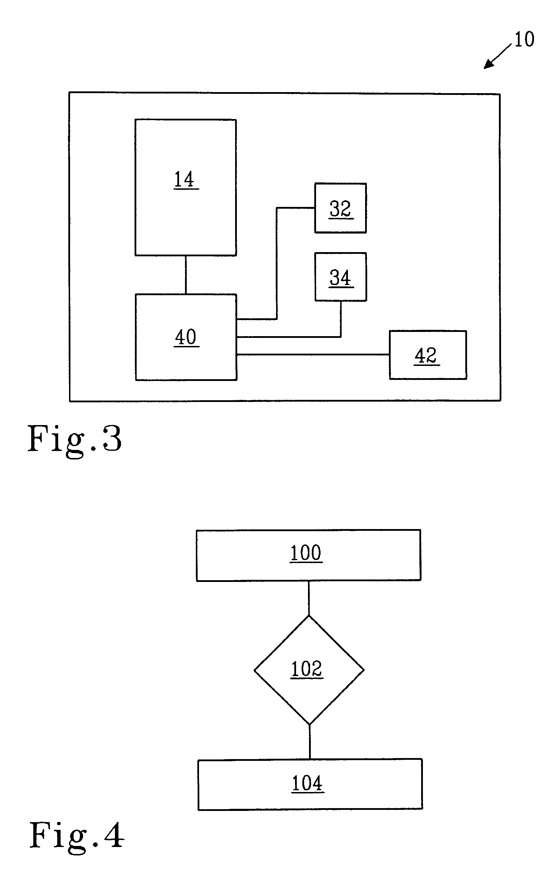

Fig. 3 shows a block schematic of the different parts of the cellular phone 10 relevant to the present invention. The display 14, the first user input unit 32 and the second user input unit 34 are here shown as separate boxes connected to a control unit 40 that provides a set of picture orientations that can be selected by a user,
detects a picture orientation selection by a user via said first or second user input unit 32, 34, and changes the picture orientation in dependence of the selections made by the user. The control unit 40 is furthermore connected to a store 42 for storing the pictures in a way known per se.

The control unit 40 is normally provided in the form of one or more processors with corresponding program memories containing suitable software code, and the store 42 is preferably provided in the form of a memory known per se, for instance a semi-conductor memory.

A preferred embodiment of the present invention will now be explained with reference to Fig. 1, 2a-b and 3.

The cellular phone 10 can automatically sense if the user wants to take a portrait picture or a landscape picture as illustrated in Fig. 1 and Fig. 2a, respectively. The overall concept of the present invention is that the user naturally uses different shutter keys, i. e. the first user input unit 32, and the second user input unit 34 depending on how he/she holds the phone 10. For instance, if a user holds the cellular phone 10 as illustrated in Fig. 1, in a portrait orientation, the joy-stick provides a first user input unit 32 for selection of a first picture orientation, i. e. the portrait orientation. The first user input unit 32 also operating as shutter key 32 operates in a way known per se as regards digital cameras for taking pictures. When the joy-stick 32 is used as shutter key, the cellular phone 10 does not rotate the picture displayed in the display 14 after it has been taken.

When the cellular phone 10 is held so that the display is in landscape orientation, as illustrated in Fig. 2a, it is also natural to use the second shutter key 34 located on the top, left side of the phone. When this second key 34 is used the picture is rotated automatically and stored in landscape as illustrated in Fig. 2b.

In a cellular phone 10 (it is assumed that a camera mode for taking pictures is already selected in a way known per se), the control unit 40 awaits a picture orientation selection through inputs from the user via the first or the second user input unit 32, 34, step 100, as illustrated in Fig. 3 and Fig. 4.

If first or second user input units 32, 34 are not actuated or depressed, the control unit 40 continues to wait, step 100. If however the joy-stick 32 or the second user input unit 34 is actuated, step 102, the control unit 40 goes on and changes picture orientation while a picture is taken, step 104.

A user can activate the natural picture orientation function from a menu in a way known per se. The function can also be activated in other ways known per se. A typical example is by means of the soft-key or the like in a way known per se. The user has the possibility of disabling the function at any time, for instance by pressing the soft-key (or alternatively by re-entering the function from the menu.

The present invention has many advantages. Common for all embodiments of the present invention, is that it does not require any expensive and complicated additional technology, such as a gyro or the like, for sensing orientation of the portable device. No additional user interaction is needed in order to get an image in wanted orientation (portrait or landscape orientation). The actual orientation of the device (the display) corresponds to how the picture will be oriented (What you see is what you get). The pictures will be displayed in correct orientation in albums mixing portrait and landscape oriented pictures.

The invention is also very inexpensive to implement, because it can be implemented using the user input units already provided in the device with just some extra software.

The present invention can be varied in many ways. The invention is of course not limited to the keys described, but can be used with any proper keys such as graphical keys represented on a touch-screen.

The invention was described in relation to a cellular phone. A cellular phone is just one example of a device in which the invention can be implemented. The invention can for instance also be used in a PDA (personal digital assistant), a palm top computer a lap top computer and a regular PC. Therefore the present invention is only to be limited by the following claims.

## Claims

1. Method for picture orientation in a portable electronic device comprising the steps of:
providing a set of picture orientations that can be selected by a user,
detecting a picture orientation selection for a user, and
changing the picture orientation in dependence of the selections made by the user while a picture is taken.

2. Method according to claim 1, further comprising the step of automatically sensing if the user wants to take a landscape or a portrait oriented picture.

3. Method according to any previous claim, wherein a first user input unit provides a first shutter key and a second user input unit provides a second shutter key, wherein the detection of a selection by an actuation of the first input unit provides selection of a first picture orientation and the detection of a selection by an actuation of the second input unit provides selection of a second picture orientation and the detection of a selection provides changing the picture orientation in dependence of the selections made by the user.

4. Device for rotating a picture in an electronic communication device comprising:
a first user input unit for selection of a first picture orientation by the user;
a second user input unit for selection of a second picture orientation by the user and
a control unit arranged to:
provide a set of picture orientations that can be selected by a user
detect a picture orientation selection by a user via said first or second user input units,
change the picture orientation in dependence of the selections made by the user while a picture is taken.

5. Device according to claim 4, wherein the first input unit provides a first shutter key and the second input unit provides a second shutter key.

6. Device according to claim 4 or 5, wherein the control unit is arranged to automatically sense if the user wants to take a landscape or a portrait picture.

7. Device according to any one of the claims 4-6, the first user input unit is the joy-stick key.

8. Device according to any of the previous claims, wherein the device is a portable electronic communication device.

9. Device according to claim 8, wherein the device is a cellular phone, a PDA or a smart-phone.
